# FASCICULE DE BREVET EUROPEEN

(11) **EP 2 241 827 B1**
(45) Date de publication et mention de la délivrance du brevet: **19.09.2012**
(21) Numéro de dépôt: 10360016.9
(22) Date de dépôt: 26.03.2010
(51) Int. Cl.: H01M 8/00, H01M 8/04, F24D 12/02, F24D 17/00, F24D 3/08

(54) **Installation et procédé de co-génération utilisant une pile à combustible pour le chauffage et la production d'eau chaude sanitaire**
Kraftwärmekopplunganlage und -verfahren mit einer Brennstoffzelle für Heizung und Warmwassererzeugung
Cogeneration installation and process using a fuel cell for heating and for producing sanitary hot water

(30) Priorité: 07.04.2009 FR 0901726
(43) Date de publication de la demande: 20.10.2010
(73) Titulaire: De Dietrich Thermique, 67580 Mertzwiller (FR)
(72) Inventeur: Lichtenberger, Yves, 67550 Vendenheim (FR); Schmidt, Jean-Michel, 67270 Alteckendorf (FR)
(74) Mandataire: Metz, Paul

(56) Documents cités:
- EP-A- 1 045 127
- EP-A- 1 947 394
- DE-U1- 29 817 378

## Description

La présente invention se rapporte à une installation et à un procédé de co-génération comprenant une pile à combustible et une installation de chauffage et de production d'eau chaude sanitaire.

Une installation de co-génération d'énergie électrique et calorifique telle que décrite dans le brevet EP 1045127 au nom de HONDA MOTOR met en oeuvre d'une part un moteur thermique à combustion interne accouplé à un générateur électrique pour former un groupe électrogène et d'autre part un ballon de stockage d'eau produisant de l'eau chaude à usage sanitaire et de chauffage. La chaleur du moteur est récupérée de façon classique pour être transférée dans le ballon de stockage d'eau chaude. Aucun problème particulier de surchauffe n'est signalé et le groupe électrogène peut inclure une pile à combustible.

Le document EP 1 045 127 divulgue les caractéristiques du préambule de la revendication 1.

Divers projets sont actuellement à l'étude pour l'utilisation des piles à combustible dans les maisons individuelles.

Ces piles utilisent en général le gaz domestique comme combustible et sont du type à échappement chaud dont la chaleur peut être récupérée par un échangeur appelé échangeur de pile à combustible.

Ces piles à combustible sont prévues pour être incorporées dans une installation de chauffage et de production d'eau chaude sanitaire et fournir simultanément de l'énergie électrique à un réseau.

Or, pour que l'installation globale soit performante et fiable, il y a lieu de faire fonctionner l'ensemble dans des conditions optimales et d'éviter la surchauffe de l'échangeur de pile à combustible.

Le but de l'invention est d'éviter de monter en température risquant la surchauffe au niveau de l'échangeur de la pile à combustible ce qui pourrait le détériorer.

Un autre objectif est de travailler au plus froid dans cet échangeur de manière à optimiser la récupération et le transfert de calories.

Le problème général que se propose de résoudre l'invention consiste à éviter toute surchauffe au niveau du ballon d'eau chaude et par conséquent celle de l'échangeur de la pile à combustible et ceci sans interrompre le fonctionnement de la pile à combustible.

A cet effet, l'invention se rapporte à une installation de co-génération selon la revendication 1, et à un procédé de co-génération selon la revendication 7,

D'autres caractéristiques et avantages de l'invention apparaîtront dans la description qui suit, donnée à titre d'exemple et accompagnée des dessins dans lesquels :

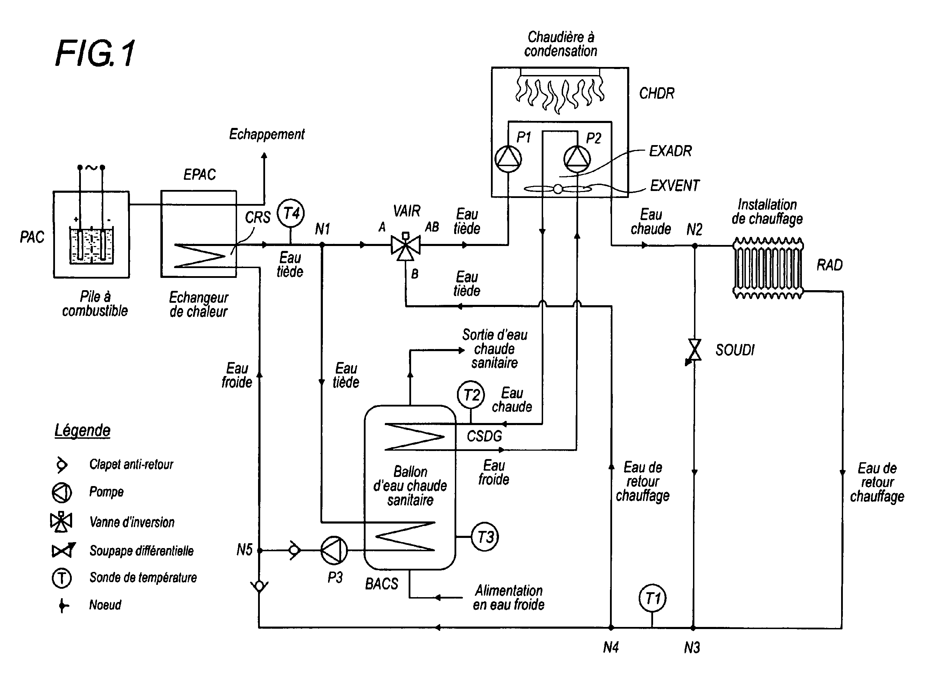

- la figure 1 est le schéma général de l'installation de co-génération dans sa partie chauffage,
- la figure 2 est un schéma identique à celui de la figure 1 illustrant le mode de fonctionnement en hiver lorsque la température de l'eau de retour du chauffage T₁ est inférieure à T₃ qui est la température de l'eau sanitaire dans le ballon,
- la figure 3 est un schéma identique à celui de la figure 1 illustrant le mode de fonctionnement en hiver lorsque T₁>T₃,
- la figure 4 est un schéma identique à celui de la figure 1 illustrant le mode de fonctionnement en été.

L'installation comprend une pile à combustible PAC du type à échappement chaud, un échangeur de pile à combustible EPAC traversé par le fluide de l'échappement chaud de PAC avant son évacuation à l'atmosphère et un circuit secondaire de récupération CRS communiquant par ses sorties avec le circuit primaire de réchauffage d'un ballon d'eau chaude sanitaire BACS arrivant dans sa partie inférieure.

Le circuit de récupération CRS de l'échangeur de pile à combustible EPAC communique également avec une installation de chauffage à travers une vanne d'inversion à trois voies VAIR comprenant une chaudière CHDR, par exemple du type à condensation, alimentant un réseau de radiateurs RAD avec ou sans un ou plusieurs planchers chauffants.

Le retour à la chaudière CHDR s'effectue par une branche directe aboutissant à l'entrée intermédiaire de la vanne d'inversion VAIR ou par un circuit long traversant l'échangeur de pile à combustible EPAC pour arriver sur l'entrée principale A de la vanne d'inversion dont l'autre entrée B est celle de l'eau de retour du chauffage.

Une soupape différentielle SOUDI est montée dans une branche de dérivation des radiateurs pour éviter l'état de circuit fermé dans le cas où tous les robinets des radiateurs seraient fermés.

Un circuit secondaire d'échange CSDG à pompe P₂ comprend un enroulement d'échangeur situé en partie supérieure du ballon d'eau chaude sanitaire BACS et un échangeur auxiliaire de chaudière EXADR pour le transfert de la chaleur entre la chaudière CHDR et la partie supérieure du ballon BACS et inversement.

Lorsque l'échange s'effectue du ballon BACS vers la chaudière CHDR l'échangeur auxiliaire EXADR fournit de la chaleur qu'il faut évacuer. On utilise pour ce faire l'extracteur de cheminée EXVENT de la chaudière qui assure l'évacuation des gaz de combustion à l'extérieur.

Le circuit secondaire d'échange CSDG passe dans l'échangeur auxiliaire de chaleur de la chaudière EXADR pour, selon le cas, réchauffer son liquide caloporteur et apporter des calories supplémentaires au ballon chauffe-eau BACS dans sa partie supérieure ou dans une fonction de sécurité, extraire de ce chauffe-eau BACS des calories excédentaires provenant de l'échangeur de pile à combustible EPAC pour éviter sa surchauffe.

L'installation complète se poursuit par un circuit de chauffage débitant par exemple sur des radiateurs RAD complétés ou non par un ou des plancher(s) chauffant(s).

Le circuit de chauffage par radiateurs RAD et éventuellement par un ou plusieurs plancher(s) chauffant(s) comporte une dérivation à son entrée entre N₂ et N₃ dans laquelle est insérée une soupape différentielle SOUDI qui a un but de sécurité. En effet, si tous les radiateurs sont fermés par leurs robinets thermostatiques, il faut que l'eau du circuit puisse circuler. C'est l'objet de cette dérivation créant dans ce cas un circuit court dans lequel débite la pompe P₁ du circuit de chauffage.

Diverses sondes de mesure de la température sont prévues aux endroits caractéristiques :
- T₁ :: température de l'eau de retour du chauffage
- T₂ :: Température de l'eau dans le circuit secondaire CSDG de réchauffage de l'eau chaude sanitaire,
- T₃ :: température de l'eau chaude sanitaire dans le ballon BACS,
- T₄ :: température de l'eau à la sortie de l'échangeur de pile à combustible EPAC.

Divers noeuds de circuit sont remarquables. Ils sont identifiés de la façon suivante :
- N₁ :: piquage pour le circuit de réchauffage principal de BACS
- N₂ :: piquage sur la branche amont de la dérivation de la soupape différentielle SOUDI,
- N₃ :: piquage sur la branche aval,
- N₄ :: piquage sur la branche retour vers VAIR
- N₅ :: piquage sur la branche retour du retour du circuit de chauffage principal de BACS.

On expliquera maintenant les différents modes de fonctionnement.

### Modes hiver

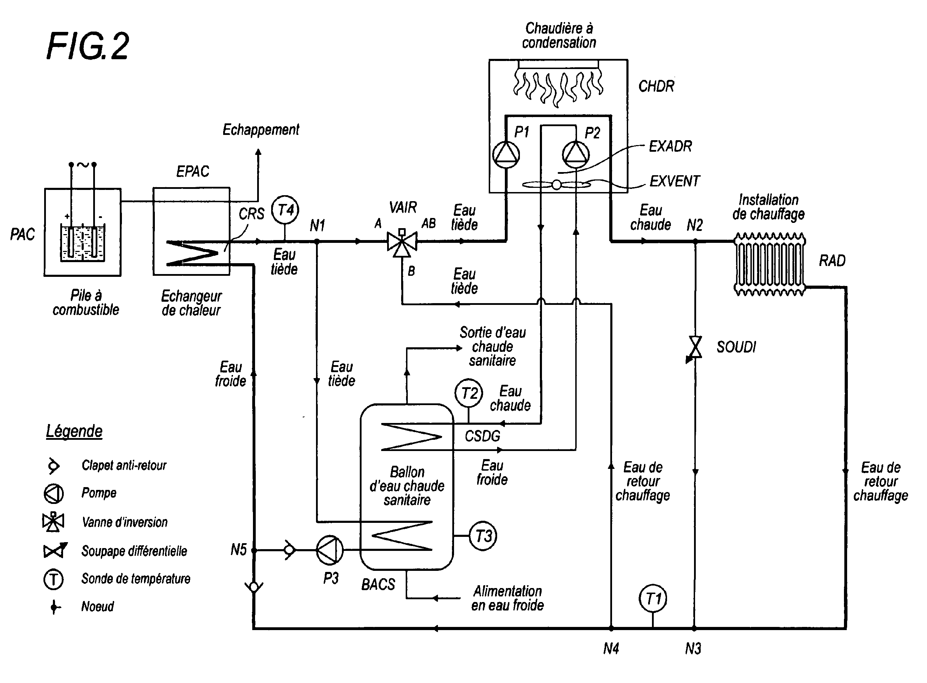

### 1°) Si T₁<T₃ (figure 2)

C'est-à-dire si la température T₁ de l'eau de retour du chauffage est inférieure à la température T₃ de l'eau sanitaire dans BACS.

Alors le circuit de l'échangeur de pile à combustible EPAC est branché au circuit du chauffage en série avec la chaudière CHDR de préférence mais non obligatoirement à condensation par la vanne d'inversion VAIR.

Toute l'énergie calorifique disponible est utilisée pour le chauffage.

Cette situation doit faire venir l'installation au bout d'un certain temps dans le second mode hiver décrit ci-après.

Le circuit utilisé apparaît en trait fort.

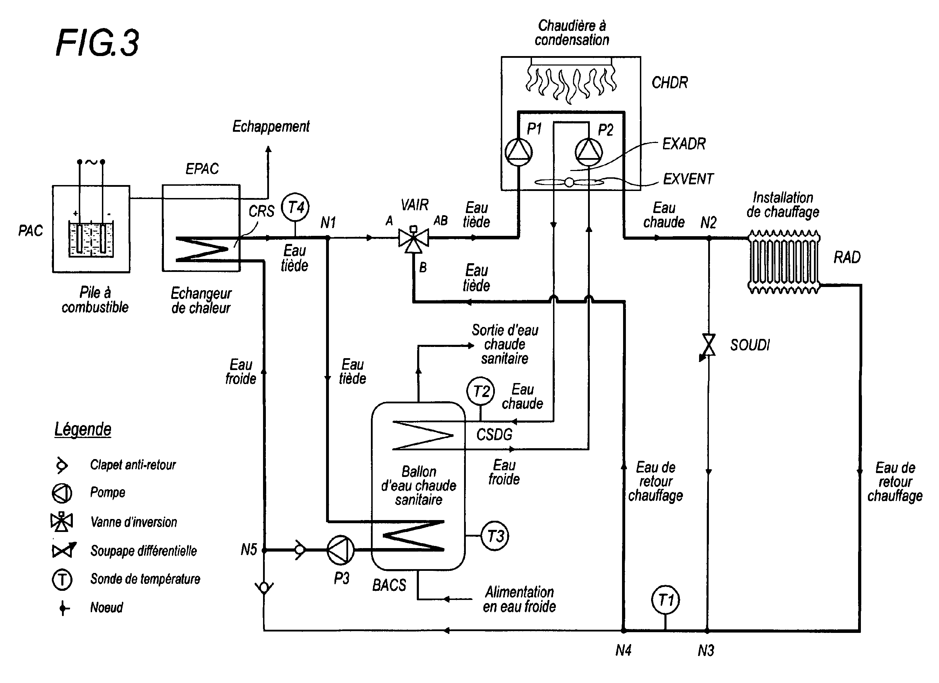

### 2°) Si T₁>T₃ (figure 3)

C'est-à-dire si la température de l'eau de retour de chauffage est supérieure à la température T₃ de l'eau sanitaire dans BACS.

Alors, la vanne d'inversion VAIR coupe la liaison en N₁ avec l'échangeur de pile à combustible EPAC et le circuit de chauffage tourne uniquement sur la chaudière CHDR à l'aide de la pompe P₁.

Le circuit de chauffage de l'eau dans BACS est isolé. L'eau circule grâce à P₃ de l'échangeur EPAC vers la partie inférieure de BACS.

Les deux circuits utilisés sont représentés en trait fort.

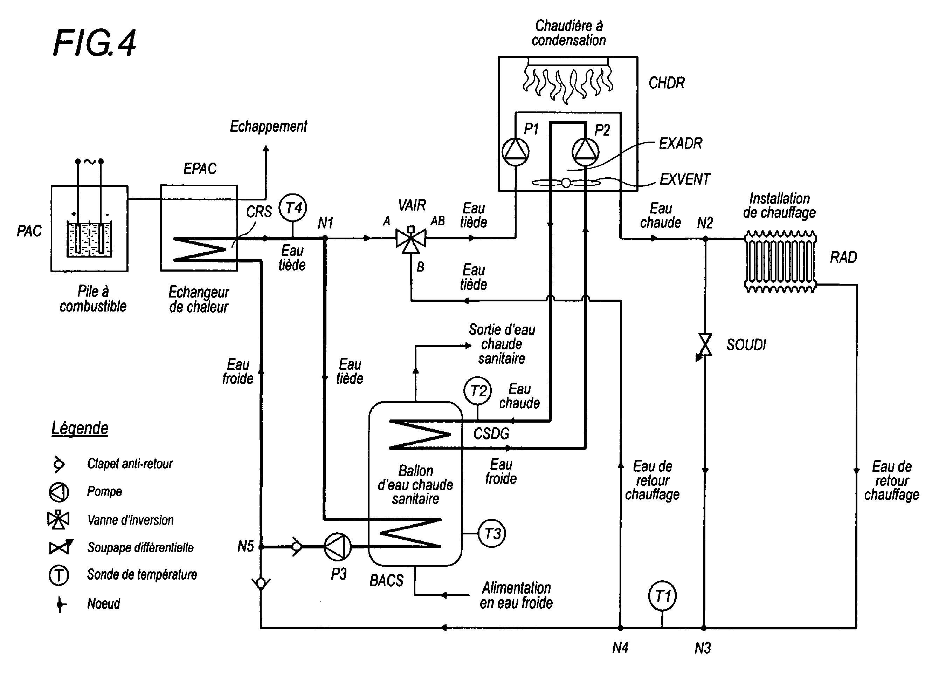

### Mode été (figure 4)

Le mode été comporte une fonction de sécurité.

Dans ce mode, P₃ fait circuler l'eau dans le le circuit d'échangeur inférieur de BACS à travers EPAC.

Si la température T₃ dans BACS reste inférieure à un seuil prédéterminé fixé par construction par exemple à 85°C le fonctionnement reste le même.

Si par contre, la température T₃ dépasse le seuil choisi par exemple 85°C, alors le circuit secondaire CSDG de BACS passant par la chaudière CHDR est mis en service par la pompe P₂.

Les calories transférées de BACS sont évacuées par l'échangeur auxiliaire de chaleur EXADR par le ventilateur d'extraction aéraulique EXVENT dans le conduit de fumées de CHDR. L'échange à l'intérieur de BACS peut alors continuer. On évite ainsi la détérioration de l'échangeur EPAC par le transfert des calories qui peut continuer à se réaliser.

On contrôle la température T₄ à la sortie de l'échangeur EPAC et la température T₂ dans le circuit additionnel de BACS pour des raisons de sécurité.

Les circuits actifs sont représentés à chaque fois en traits forts.

L'originalité du procédé réside dans le fonctionnement suivant.

Au delà d'une température critique c'est-à-dire dangereuse pour l'échangeur de pile à combustible EPAC et/ou pour le ballon d'eau chaude sanitaire BACS, on transfère à travers BACS la chaleur provenant de l'échangeur de pile à combustible EPAC vers l'échangeur auxiliaire EXADR de la chaudière pour l'évacuer ou la réutiliser.

## Revendications

1. Installation de co-génération comprenant, une chaudière (CHDR), un ballon d'eau chaude sanitaire (BACS), une installation de chauffage des pièces ou locaux, une pile à combustible (PAC) à échappement chaud avec un échangeur de pile à combustible (EPAC), apportant ses calories à travers un circuit (CRS) à un échangeur primaire de partie inférieure du ballon d'eau chaude sanitaire (BACS) à deux circuits de chauffage, l'un primaire en partie basse et l'autre secondaire (CSDG) en partie haute, le circuit secondaire (CSDG) de chauffage du ballon d'eau chaude sanitaire (BACS) étant branché sur un échangeur auxiliaire (EXADR) de la chaudière (CHDR), à travers plusieurs circuits et une vanne d'inversion (VAIR), **caractérisée en ce que** la chaudière (CHR) est à évacuation forcée des gaz de combustion et **en ce que** l'échangeur auxiliaire (EXADR) de la chaudière (CHDR) faisant partie du circuit secondaire (CSDG) de chauffage du ballon (BACS) est placé dans la sortie aéraulique du flux des gaz chauds de combustion extraits par un extracteur aéraulique (EXVENT) pour transférer les calories de la chaudière (CHDR) lorsqu'elle fonctionne, vers le ballon d'eau chaude sanitaire (BACS) et les évacuer à l'extérieur en cas de risque de surchauffe dans ledit ballon.

2. Installation de co-génération selon la revendication 1 **caractérisé par** un mode de fonctionnement d'hiver selon lequel, si la température T₁ de l'eau du retour de chauffage est inférieure à la température T₃ dans le ballon (BACS) on fait débiter le circuit de l'échangeur (EPAC) dans le circuit de chauffage en passant par la chaudière.

3. Installation de co-génération selon la revendication 1 **caractérisé par** un mode de fonctionnement d'hiver selon lequel, si la température T₁ de l'eau de retour du chauffage est supérieure à T₃ température de l'eau dans le ballon, le circuit de l'échangeur (EPAC) débite grâce à une pompe P₃ et à la vanne d'inversion (VAIR) dans le circuit primaire de chauffage du ballon (BACS).

4. Installation de co-génération selon la revendication 1 **caractérisé par** un mode de fonctionnement d'été selon lequel le circuit de l'échangeur (EPAC) débite dans le circuit de chauffage primaire de (BACS) avec un transfert de calories vers l'extérieur par l'échangeur auxiliaire (EXADR) de la chaudière (CHDR).

5. Installation de co-génération selon la revendication 1 **caractérisée par** une dérivation à l'entrée du circuit des radiateurs, cette dérivation contenant une soupape différentielle (SOUDI) passante si la pression à l'entrée du circuit des radiateurs est supérieure à la pression dans la branche de retour des radiateurs.

6. Installation selon la revendication 1 **caractérisée en ce que** la chaudière (CHDR) est une chaudière à condensation.

7. Procédé de co-génération mis en oeuvre par l'installation selon l'une quelconque des revendications ci-dessus **caractérisé en ce qu'**au delà d'une température critique, on transfère à travers (BACS) la chaleur provenant de l'échangeur de pile à combustible (EPAC) vers l'échangeur auxiliaire (EXADR) de la chaudière.

8. Procédé de co-génération selon la revendication précédente **caractérisé en ce que** la température critique est celle dangereuse pour l'échangeur de pile à combustible (EPAC).

9. Procédé de co-génération selon la revendication 8 **caractérisé en ce que** la température critique est celle dangereuse pour l'échangeur de pile à combustible (EPAC) et pour le ballon (BACS).

## Claims

1. Cogeneration plant comprising a boiler (CHDR), a sanitary hot water tank (BACS), a heating equipment for the rooms, a fuel cell (PAC) with a hot exhaust exit arranged with a fuel cell exchanger (EPAC), its calories being supplied through a circuit (CRS) to a primary exchanger of the lower part of the sanitary hot water tank (BACS) with two heating circuits, a primary circuit in the lower part and the other secondary circuit (CSDG) in the higher part, the secondary circuit (CSDG) for heating the sanitary hot water tank (BACS) being connected to an auxiliary exchanger (EXADR) of the boiler (CHDR), through several circuits and a changeover valve (VAIR)1, **characterized in that** the boiler (CHR) is of the forced exhaust type for the combustion gases and **in that** the auxiliary exchanger (EXADR) of the boiler (CHDR), being part of the secondary circuit (CSDG) for the sanitary hot water tank (BACS), is placed in the air exit of the flow of the hot combustion gases, extracted by an air extractor (EXVENT) to transfer the calories of the boiler (CHDR), when it operates, towards the sanitary hot water tank (BACS) and to evacuate them outside in case of a risk of overheating in said sanitary hot water tank.

2. Cogeneration plant according to claim 1 **characterized by** a winter operation mode according to which, if the temperature T₁ of the return water of the heating equipment is lower than the temperature T₃ in the sanitary hot water tank (BACS), one makes flow the circuit of the exchanger (EPAC) into the heating equipment circuit, via the boiler.

3. Cogeneration plant according to claim 1, **characterized by** a winter operation mode according to which, if the temperature T₁ of the return water of the heating equipment is higher than the temperature T₃ of the water in the sanitary hot water tank, the circuit of the exchanger (EPAC), thanks to a pump P₃ and to the changeover valve (VAIR), flows into the primary heating circuit of heating of the sanitary hot water tank (BACS).

4. Cogeneration plant according to claim 1, **characterized by** a summer operation mode according to which the circuit of the exchanger (EPAC) is forced into the primary heating circuit of (BACS) with a calories transfer outwards through the auxiliary exchanger (EXADR) of the boiler (CHDR).

5. Cogeneration plant according to claim 1, **characterized by** a by-pass at the entry of the circuit of the radiators, this by-pass containing a differential valve (SOUDI) that is open if the pressure at the entry of the circuit of the radiators is higher than the pressure in the return branch of the radiators.

6. Installation according to claim 1 **characterized in that** the boiler (CHDR) is a condensation boiler.

7. Cogeneration process performed by the installation according to any of the above claims, **characterized in that** beyond a critical temperature, the heat coming from the fuel cell exchanger (EPAC) is transferred through (BACS) towards the auxiliary exchanger (EXADR) of the boiler.

8. Cogeneration process according to the previous claim **characterized in that** the critical temperature is that one which is dangerous for the fuel cell exchanger (EPAC).

9. Cogeneration process according to claim 8, **characterized in that** the critical temperature is that which is dangerous for the fuel cell exchanger (EPAC) and for the sanitary hot water tank (BACS).

## Patentansprüche

1. Kraftwärmekopplungsanlage mit einem Heizkessel (CHDR), einem Warmwasserspeicher (BACS), einer Heizungsanlage für die Zimmer oder Räume, einer Brennstoffzelle (PAC) mit Warmwasserauslass mit einem Brennstoffzellentauscher (EPAC), der seine Kalorien über einen Kreislauf (CRS) zu einem Primärtauscher am Unterteil des Warmwasserspeichers (BACS) mit zwei Heizkreisläufen leitet, einem primären im unteren Teil und einem sekundären (CSDG) im oberen Teil, wobei der sekundäre Kreislauf (CSDG) zur Erwärmung des Warmwasserspeichers (BACS) über mehrere Kreisläufe und ein Umschaltventil (VAIR) an einen Hilfstauscher (EXADR) des Heizkessels (CHDR) angeschlossen ist, **gekennzeichnet dadurch, dass** der Heizkessel (CHR) vom Typ mit zwangsweisem Ablassen der Verbrennungsgase ist, sowie dadurch, dass der Hilfstauscher (EXADR) des Heizkessels (CHDR), der zum sekundären Kreislauf (CSDG) zur Erwärmung des Warmwasserspeichers (BACS) gehört, im Luftausgang des Stroms der warmen Verbrennungsgase liegt, die von einem Luftauszieher (EXVENT) herausgezogen werden, um die Kalorien des Heizkessels (CHDR), wenn er in Betrieb ist, zum Warmwasserspeicher (BACS) zu befördern, und sie bei Überhitzungsrisiko in dem Warmwasserspeicher nach außen abzulassen.

2. Kraftwärmekopplungsanlage nach Anspruch 1, **gekennzeichnet durch** einen Wintermodus, demzufolge, wenn die Temperatur T₁ des Heizungsrücklaufwassers niedriger als die Temperatur T₃ im Warmwasserspeicher (BACS) ist, man den Kreislauf des Tauschers (EPAC) **durch** den Heizkessel in den Heizkreislauf ausmünden lässt.

3. Kraftwärmekopplungsanlage nach Anspruch 1 **gekennzeichnet durch** einen Wintermodus, demzufolge, wenn die Temperatur T₁ des Heizungsrücklaufwassers höher als die Temperatur T₃ des Wassers im Warmwasserspeicher ist, der Kreislauf des Tauschers (EPAC) dank einer Pumpe P₃ und des Umschaltventils (VAIR) in den primären Heizkreislauf des Warmwasserspeichers (BACS) mündet.

4. Kraftwärmekopplungsanlage nach Anspruch 1, **gekennzeichnet durch** einen Sommermodus, demzufolge der Kreislauf des Tauschers (EPAC) in den primären Heizkreislauf von (BACS) mündet, mit einer Übertragung von Kalorien nach außen **durch** den Hilfstauscher (EXADR) des Heizkessels (CHDR).

5. Kraftwärmekopplungsanlage nach Anspruch 1, **gekennzeichnet durch** eine Ableitung am Eingang des Kreislaufs der Heizkörper, die ein Differenzialventil (SOUDI) enthält, das offen ist, wenn der Druck am Eingang des Kreislaufs der Heizkörper höher ist als der Druck in der Rücklaufleitung der Heizkörper.

6. Anlage nach Anspruch 1, **gekennzeichnet dadurch, dass** der Heizkessel (CHDR) ein Kondensationsheizkessel ist.

7. Kraftwärmekopplungs-Verfahren unter Zuhilfenahme der Anlage nach einem beliebigen der vorherigen Patentansprüche, **gekennzeichnet dadurch, dass** man oberhalb einer kritischen Temperatur über (BACS) die Wärme vom Brennstoffzellentauscher (EPAC) zum Hilfstauscher (EXADR) des Heizkessels leitet.

8. Kraftwärmekopplungsverfahren nach dem vorherigen Anspruch, **gekennzeichnet dadurch, dass** die kritische Temperatur diejenige ist, die gefährlich für den Brennstoffzellentauscher (EPAC) ist.

9. Kraftwärmekopplungsverfahren nach Anspruch 8, **gekennzeichnet dadurch, dass** die kritische Temperatur diejenige ist, die gefährlich für den Brennstoffzellentauscher (EPAC) und für den Warmwasserspeicher (BACS) ist.
